# NEUE EUROPÄISCHE PATENTSCHRIFT

(11) **EP 0 363 451 B2**
(45) Veröffentlichungstag und Bekanntmachung des Hinweises auf die Entscheidung über den Einspruch: **15.12.1999**
(45) Hinweis auf die Patenterteilung: 06.10.1993
(21) Anmeldenummer: 89902774.2
(22) Anmeldetag: 28.02.1989
(51) Int. Cl.: C09K 19/42, G02F 1/137

(54) **SUPERTWIST-FLÜSSIGKRISTALLANZEIGE**
SUPERTWIST LIQUID CRYSTAL DISPLAY
AFFICHAGE PAR CRISTAUX LIQUIDES A SUPERTORSION

(30) Priorität: 10.03.1988 DE 3807958
(43) Veröffentlichungstag der Anmeldung: 18.04.1990
(73) Patentinhaber: MERCK PATENT GmbH, 64271 Darmstadt (DE)
(72) Erfinder: WEBER, Georg, D-6106 Erzhausen (DE); HITTICH, Reinhard, D-6101 Modautal 1 (DE)
(86) Internationale Anmeldenummer: EP8900189
(87) Internationale Veröffentlichungsnummer: WO8908692

(56) Entgegenhaltungen:
- EP-A- 0 131 216
- EP-A- 0 176 037
- EP-A- 0 205 998
- EP-A- 0 232 052
- EP-A- 0 234 892
- EP-A- 0 260 450
- EP-A- 0 261 614
- EP-A- 0 268 226
- EP-A- 0 273 443
- EP-A- 0 280 902
- EP-A- 0 316 186
- WO-A-87/05317
- JP-A- 59 170 042
- JP-A- 60 045 549
- JP-A- 60 195 183
- JP-A- 62 143 990
- JP-A- 63 502 596
- JP-A-62/143990 (engl. translation thereof)
- F.Leenhouts &M. Schadt, Japan Display '86, 388-391,(Proceedings of the 6th International Research Conference, Session 9, Supertwisted LCDs)
- M.Schadt, P.R.Gerber, Z.Naturforsch. 37a, 165-178, 1982
- M.Akatsuka et al., Japan Display '86, 400-403 (Proceedings of the 6th International Research Conference, Session 9, Supertwisted LCDs)
- M.A.Osmann & T. Huynh-Ba, Mol.Cryst.Liq.Cryst., Vol.82, pages 331-338

## Beschreibung

Die Erfindung betrifft eine Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie und mit mindestens einem chiralen Dotierstoff,
- Elektrodenschichten mit darüberliegenden Orientierungsschichten auf den Innenseiten der Trägerplatten,
- einem Anstellwinkel Zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach Zwischen 160 und 360°, dadurch gekennzeichnet, daß die nematische Flüssigkristallmischung folgenden Bedingungen genügt:
- nematischer Phasenbereich von mindestens 60 °C,
- Viskosität von 30 mPa.s oder darunter,
- Δ∈/∈_{⊥} < 1.5, wobei Δ∈ die dielektrische Anisotropie und ∈_{⊥} die Dielektrizitätskonstante in Richtung der kurzen Achse der Flüssigkristallmoleküle bedeutet, und
- Δ∈ größer oder gleich + 5,
und auf folgenden Komponenten basiert:
a) deutlich dielektrisch positiven Verbindungen mit hohem ∈_{⊥} ausgewählt aus der Gruppe bestehend aus den Formeln 1-8: 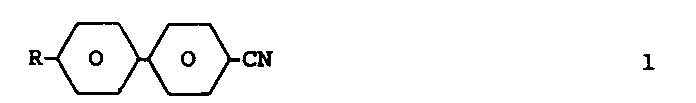 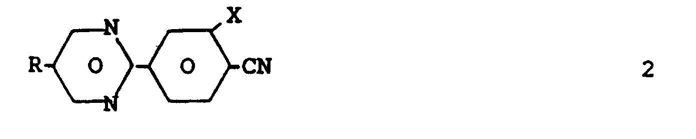 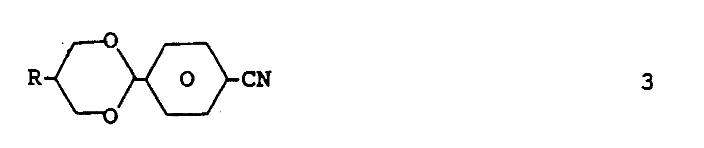 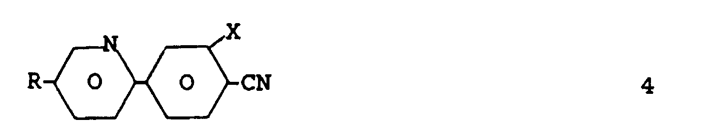 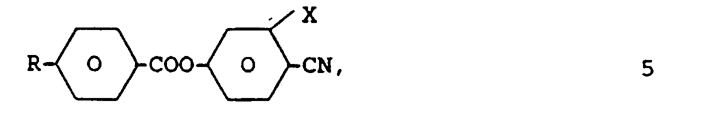 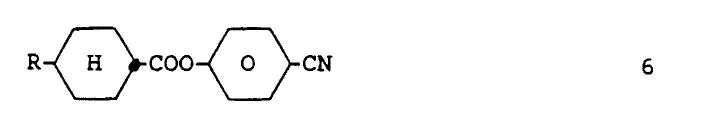 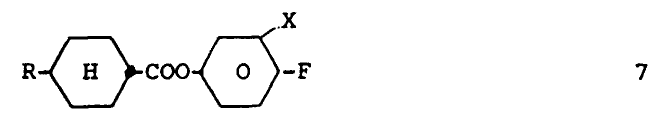 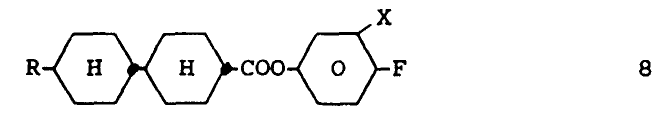 und/oder Verbindungen der Formel A und/oder B 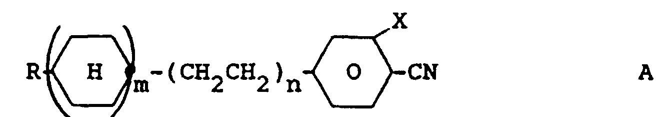 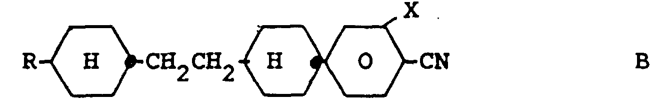 und gegebenenfalls Verbindungen ausgewählt aus der Gruppe bestehend aus den Formeln 9 bis 11 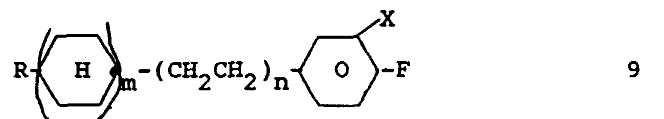 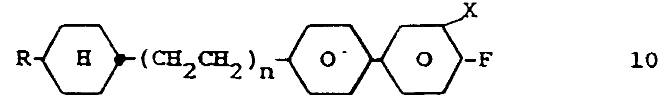 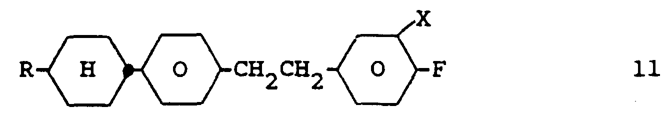 und
b) relativ unpolaren Verbindungen mit großem ε_{⊥} ausgewählt aus der Gruppe bestehend aus den Formeln 12 bis 18: 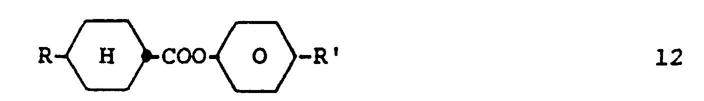 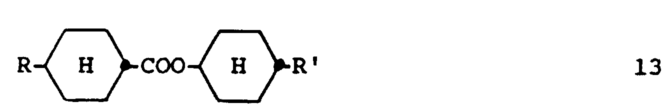 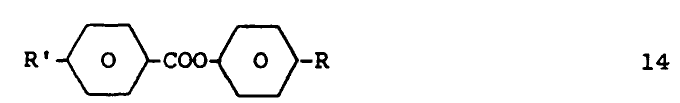 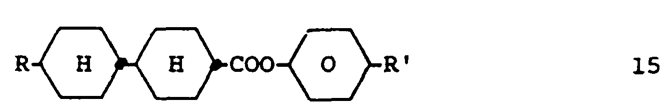 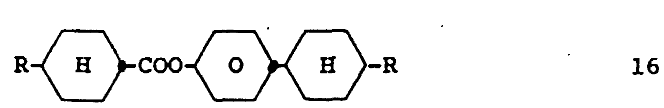 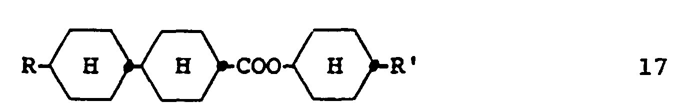 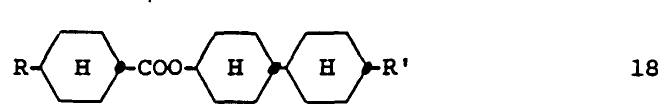 und/oder Verbindungen aus der Gruppe bestehend aus den Formeln C und D 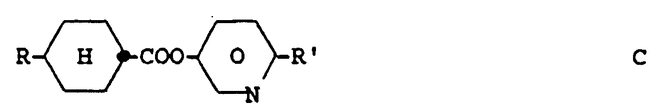 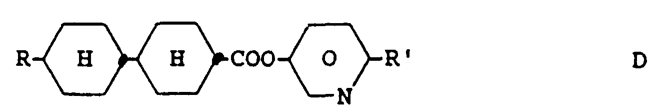 und gegebenenfalls Verbindungen mit hoher Doppelbrechung aus der Gruppe bestehend aus den Formeln 19 und 20: 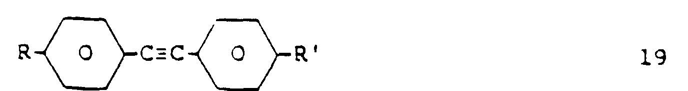 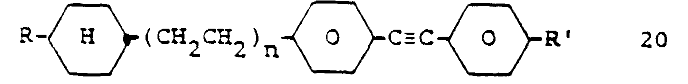 wobei X H oder F, m 1 oder 2, n 0 oder 1, und R in jedem Fall jeweils geradkettiges Alkyl, Oxa-alkyl oder Alkenyl mit 2 bis 7 C-Atomen und R' jeweils geradkettiges Alkyl oder Alkoxy mit jeweils 1 bis 7 C-Atomen bedeutet mit den Maßgaben,
   daß die Mischung eine oder mehrere Verbindungen der Formeln A und/oder B enthält, worin X Fluor bedeutet, und
   daß eine Mischung aus
   10 % 4-[2-(trans-4-Propylcyclohexyl)ethyl-4'-propyldiphenylacetylen,
   10 % 4-[2-(trans-4-Propylcyclohexyl )ethyl-4'-butyldiphenylacetylen,
   10 % 4-(trans-4-Ethylcyclohexyl )-2-fluorobenzonitril,
   10 % 4-(trans-4-Propylcyclohexyl)-2-fluorobenzonitril,
   10 % 4-Fluorophenyl-trans-4-pentylcyclohexancarboxylat,
   10 % 4-Fluorophenyl-trans-4-heptylcyclohexancarboxylat,
   10 % 4-Ethoxyphenyl-trans-4-propylcyclohexancarboxylat,
   20 % 4-[trans-4-(trans-4-propylcyclohexyl)cyclohexyl]propylbenzol,
   5 % 4-(trans-4-Pentylcyclohexyl)-4'-ethylbiphenyl und
   5 % 4"-Pentyl-4-cyanoterphenyl
ausgeschlossen ist.

Supertwist-Flüssigkristallanzeigen (SFK-Anzeigen) gemäß des Oberbegriffs sind bekannt, z.B. aus EP 0 131 216 B1; DE 34 23 993 A1; EP 0 098 070 A2; M, Schadt und F, Leenhouts. 17. Freiburger Arbeitstagung Flüssigkristalle (8.-10.04.87); K. Kawasaki et al., SID 87 Digest 391 (20.6); M. Schadt und F. Leenhouts. SID 87 Digest 372 (20.1); K. Katoh et al., Japanese Journal of Aoplied Physics, Vol. 26, No. 11, L 1784-L 1786 (1987); F. Leenhouts et al., Appl. Phys. Lett. 50 (21). 1468 (1987); H.A. van Sprang und H.G. Koopman. J. Appl. Phys. 62 (5), 1734 (1987); T.J. Scheffer und J. Nehring, Appl. Phys. Lett. 45 (10). 1021 (1984), M. Schadt und F Leenhouts. Appl. Phys. Lett. 50 (5), 236 (1987) und E.P. Raynes, Mol. Cryst. Liq. Cryst. Letters Vol. 4 (1), pp. 1-8 (1986). Der Begriff SFK-Anzeigen umfaßt nier jede höher verdrillte Anzeige mit einem Verdrillungswinkel dem Betrage nach zwischen 160° und 360°, wie beispielsweise die Anzeigen nach Waters et al. (C.M. Waters et al., Proc. Soc. Inf. Disp. (New York) (1985) (3rd Intern. Display Conference. Kobe. Japan), die STN-LCD's (DE OS 35 03 259). SBE-LCD's (T.J. Scheffer und J. Nehring. Appl. Phys. Lett. 45 (1984) 1021), OMI-LCD's (M. Schadt und F. Leenhouts. Appl. Phys. Lett. 50 (1987), 236. DST-LCD's (EP OS 0 246 342) oder 3W-STN-LCD's (K. Kawasaki et al.. SID 87 Digest 391 (20.6)).

EP 0 280 902 beschreibt Flüssigkristallverbindungen.

JP 60-195 183 (A), EP 0 205 998, EP 0 232 052, WO 87/05 317, JP 60-045 549 (A) und JP 59-170 042 (A) beschreiben Flüssigkristallmischungen für TN-Anzeigen.

F. Leenhouts, M. Schadt, "Electro-Optics of Supertwist Displays, Dependence on Liquid Crystal Material Parameters", Japan Display '86, pp. 388-391; M. Schadt und P.R. Gerber, "Class Specific Physical Properties of Liquid Crystals and Correlations with Molecular Structure and Static Electrooptical Performance", 2. Naturforsch, 37a, p. 165-178 (1982); M. Akatsuka et al., "ElectroOptical Properties of Supertwisted Nematic Display Obtained by Rubbing Technique", Japan Display '86, pp. 400-401, und M.A. Osman und T. Huynh-Ba, "Nematogens for Matrix-Addressed Twisted Nematic Displays - I", Mol. Cryst. Liq. Cryst. Vol. 82 (Letters), pp. 331-338 (1983), beschreiben Struktur-Eigenschaftsbeziehungen von Flüssigkristallen für elektrooptische Anwendungen.

EP 0 261 614, EP 0 316 186 und JP 62-143 990 (A) beschreiben Flüssigkristallmischungen für SBE-bzw. STN-Anzeigen.

Derartige Anzeigen zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus. Von besonderem Interesse sind Supertwist-Anzeigen mit sehr hoher Kennliniensteilheit. Als Maß für die Kennliniensteilheit wird im allgemeinen das Verhältnis V₅₀/V₁₀ gewählt (V₅₀ = Spannung bei 50 % Kontrast/V₁₀ = Spannung bei 10 % Kontrast). Zur Erzielung von hohen Kennliniensteilheiten wurden bisher insbesondere die elastischen Eigenschaften der Flüssigkristallmischung optimiert. Die erzielten Steilheiten waren jedoch nicht für jede Anwendung ausreichend.

Es besteht somit immer noch ein großer Bedarf nach SFK-Anzeigen mit sehr hohen Kennliniensteilheiten bei gleichzeitig großem Arbeitstemperaturbereich, kurzen Schaltzeiten und niedriger Schwellenspannung.

Der Erfindung liegt die Aufgabe Zugrunde, SFK-Anzeigen bereitzustellen, die die oben angegebenen Nachteile nicht oder nur in geringerem Maße und gleichzeitig sehr hohe Kennliniensteilheiten aufweisen.

Es wurde nun gefunden, daß diese Aufgabe gelöst werden kann, wenn man in diesen Anzeigen nematiscne Flüssigkristallmischungen verwendet, die folgenden Bedingungen genügen:
- nematischer Phasenbereich von mindestens 60 °C,
- Viskosität von 30 mPa.s oder darunter, und
- Δ∈/∈ < 1.5, wobei Δ∈ die dielektrische Anisotropie und ∈ die Dielektrizitätskonstante in Richtung der kurzen Achse der Flüssigkristallmoleküle bedeutet,
- Δ∈ größer oder gleich + 5,
und auf folgenden Komponenten basieren:
a) deutlich dielektrisch positiven Verbindungen mit hohem ∈_{⊥} ausgewählt aus der Gruppe bestehend aus den Formeln 1-8: 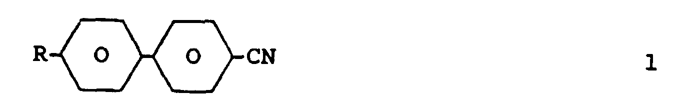 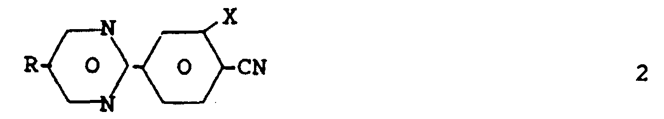 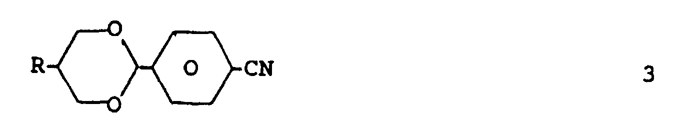 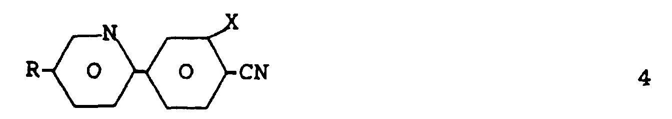 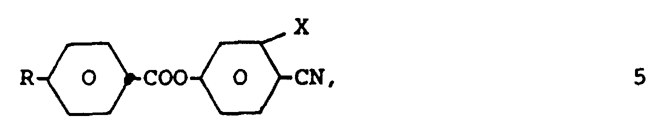 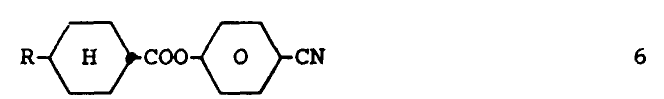 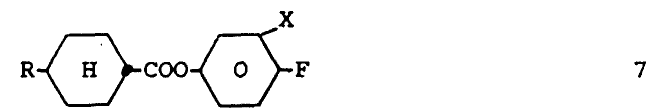 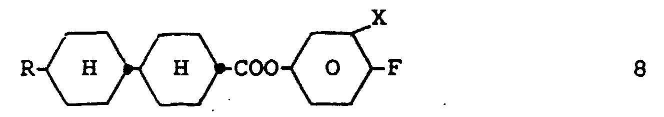 und/oder Verbindungen der Formel A und/oder B 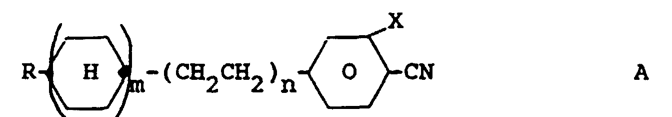 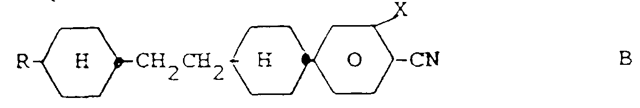 und gegebenenfalls Verbindungen ausgewählt aus der Gruppe bestehend aus den Formeln 9 bis 11 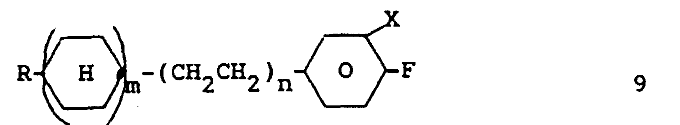 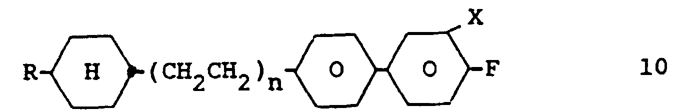 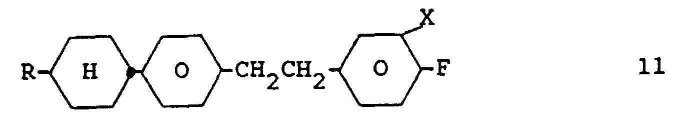 und
b) relativ unpolaren Verbindungen mit großem ∈_{⊥} ausgewählt aus der Gruppe bestehend aus den Formeln 12 bis 18: 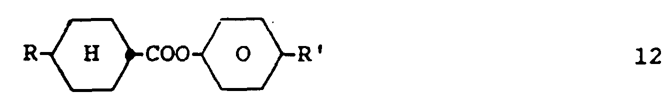 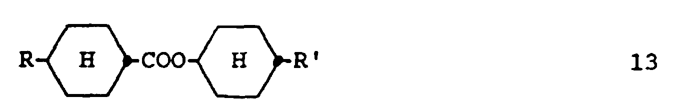 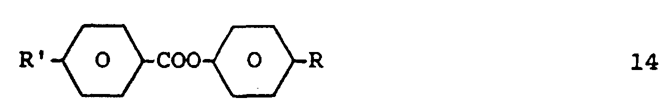 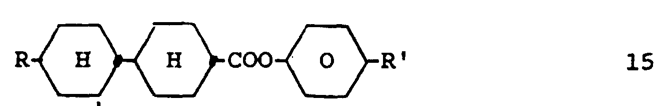 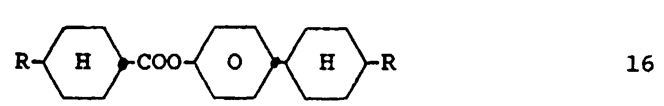 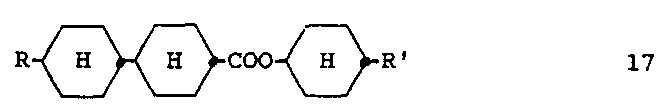 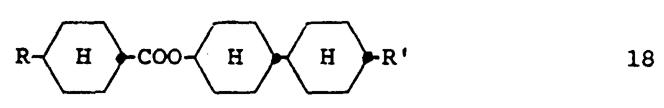 und/oder Verbindungen aus der Gruppe bestehend aus den Formeln C und D 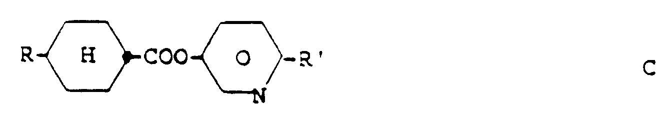 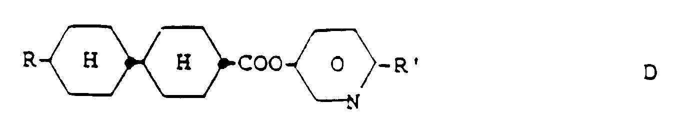 und gegebenenfalls Verbindungen mit hoher Doppelbrechung aus der Gruppe bestehend aus den Formeln 19 und 20: 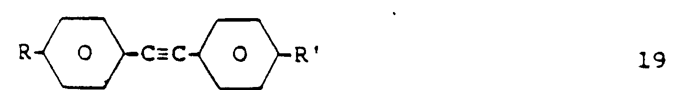 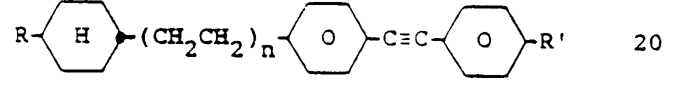
wobei X H oder F, m 1 oder 2, n 0 oder 1, und R in jedem Fall jeweils geradkettiges Alkyl, Oxaalkyl oder Alkenyl mit 2 bis 7 C-Atomen und R' jeweils geradkettiges Alkyl oder Alkoxy mit jeweils 1 bis 7 C-Atomen bedeutet mit den Maßgaben,
daß die Mischung eine oder mehrere Verbindungen der Formeln A und/oder B enthält, worin X Fluor bedeutet, und
daß eine Mischung aus
10 % 4-[2-(trans-4-Propylcyclohexyl)ethyl-4'-propyldiphenylacetylen,
10 % 4-[2-(trans-4-Propylcyclohexyl)ethyl-4'-butyldiphenylacetylen,
10 % 4-(trans-4-Ethylcyclohexyl)-2-fluorobenzonitril,
10 % 4-(trans-4-Propylcyclohexyl)-2-fluorobenzonitril,
10 % 4-Fluorophenyl-trans-4-pentylcyclohexancarboxylat,
10 % 4-Fluorophenyl-trans-4-heptylcyclohexancarboxylat,
10 % 4-Ethoxyphenyl-trans4-propylcyclohexancarboxylat,
20 % 4-[trans-4-(trans-4-propylcyclohexyl)cyclohexyl]propylbenzol,
5 % 4-(trans-4-Pentylcyclohexyl)-4'-ethylbiphenyl und
5 % 4"-Pentyl-4-cyanoterphenyl
ausgeschlossen ist.

Gegenstand der Erfindung ist somit eine entsprechende Supertwist-Flüssigkristallanzeige.

Gegenstand der Erfindung sind ferner entsprechende Anzeigeelemente, die folgenden Bedingungen genügen:
- Produkt von Doppelbrechung Δn und der Schichtdicke der Flüssigkristallmischung zwischen 0.1 µm und 2,5 µm.
- Dielektrizitätskonstante ∈_{⊥} größer oder gleich 4.

Gegenstand der Erfindung ist ferner die Verwendung entsprechender Flüssigkristallmischungen als Dielektrika entsprechender Anzeigen.

Gegenstand der Erfindung sind schließlich auch entsprechende Flüssigkristallmischungen zur Verwendung in SKF-Anzeigen.

Nematische Flüssigkristallmischungen, die zwei der drei angegebenen Bedingungen genügen sind bekannt und werden in vielfältigen Ausführungsfcrmen kommerziell genutzt. Es ist weiterhin bekannt, daß durch Verwendung hoher Anteile von Phenyibenzoaten entsprechend DE-PS 21 67 252 oder von stark dielektrisch negativen Flüssigkristallen (z.B. entscrechend DE-OS 32 31 707) Werte von Δ∈/∈_{⊥} < 1.5 realisiert werden können. Diese Flüssigkristallmischungen zeichnen sich jedoch durch hohe Viskositäten aus, wobei die Werte bei 20° oft zwischen 40 und 50 mPa.s oder höher liegen. Entsorechende SFK-Anzeigen haben für eine kommerzielle Anwendung somit deutlich zu lange Schaltzeiten.

Die erfindungsgemäßen Flüssigkristallmischungen ermöglichen es jedoch bei niedrigen Viskositäten gleichzeitig einen niedrigen Wert für Δ∈/∈_{⊥} zu erreichen, wodurch in SKF-Anzeigen hervorragende Steilheiten der elektrooptischen Kennlinie erzielt werden können. Die erfindungsgemäßen Flüssigkristallmischungen haben vorzugsweise ein ∈_{⊥} ≧ 4, insbesondere ∈_{⊥} ≧6. Δ∈/∈_{⊥} ist vorzugsweise ≦ 1,3, insbesondere ≦1,1. Die Viskosität bei 20 °C ist vorzugsweise ≦ 25 mPa.s. Der nematische Phasenbereich ist vorzugsweise mindestens 70, insbesondere mindestens 80°. Vorzugsweise erstreckt sich dieser Bereich mindestens von -20° bis +70°.

Die einzelnen Verbindungen der Formeln 1 bis 20, bzw. A bis D oder auch andere Verbindungen, die in den erfindungsgemäßen SFK-Anzeigen verwendet werden können, sind entweder bekannt, oder sie können analog zu den bekannten Verbindungen hergestellt werden.

Bevorzugte erfindungsgemäß verwendbare Flüssigkristallmischungen enthalten insgesamt vorzugsweise 40-100 %, insbesondere 75-100 % an Verbindungen der Formel 1 bis 20 und A bis D. Sie enthalten Insgesamt vorzugsweise 10-30, insbesondere 12-20 Komponenten. Besonders bevorzugt sind Flüssigkristallmischungen. die mindestens eine Komponente der Formeln 7, 8, 9, 10 und/oder 11 enthalten. Ferner sind diejenigen Mischungen bevorzugt, die mindestens eine Tolanverbindung der Formel 19 und/oder 20 enthalten.

Die erfindungsgemäßen Mischungen enthalten vorzugsweise 10-30 %, insbesondere 15-25 % an Verbindungen ausgewählt aus der Gruppe der Formeln 1-6. X ist vorzugsweise Fluor. Verbindungen der Formeln 1, 2, 3 und 5 sind besonders bevorzugt. In einer besonders bevorzugten Ausführungsform sind gleichzeitig Verbindungen der Formeln 1 und 2, 1 und 3, 1 und 5, 2 und 3, 2 und 5 oder 1 und 4 anwesend.

Die Verbindungen der Formel A umfassen diejenigen der folgenden Teilformeln 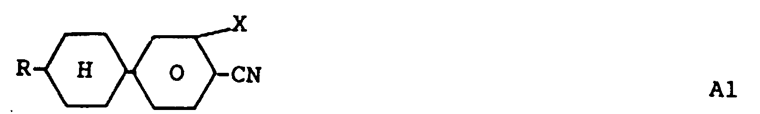 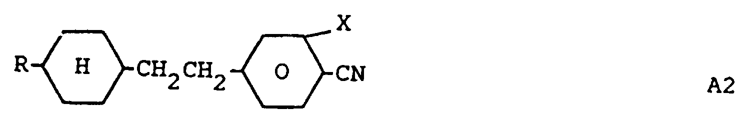 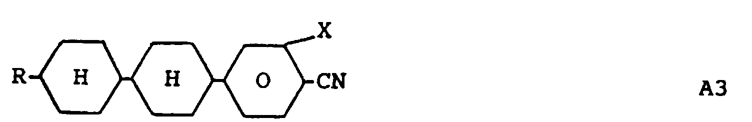 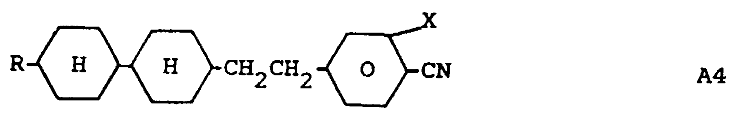 Darunter sind diejenigen der Formeln A1 und A2 (X = vorzugsweise H) sowie A3 und A4 (X = vorzugsweise F) bevorzugt. Vorzugsweise enthalten die Mischungen eine oder mehrere Verbindungen der Formeln A und/oder B, worin X Fluor bedeutet.

Falls die Gruppe der deutlich dielektrisch positiven Verbindungen in den erfindungsgemäßen Mischungen überwiegend auf Verbindungen der Formeln A und/oder B basiert, enthalten die Mischungen vorzugsweise eine oder mehrere Verbindungen der Formeln 1-6 und/oder 5-25 % an einer oder mehreren Fluorverbindungen der Formeln 7, 8, 9, 10 oder 11. Dies gilt insbesondere dann, wenn überwiegend Verbindungen der Formel A1 (X = H) benutzt werden.

Den Gesamtanteil der Verbindungen der Formeln 1 bis 11 sowie A und B kann der Fachmmann in einfacher Weise so einstellen, daß Δ∈ größer oder gleich +5 ist. Vorzugsweise enthalten die Mischungen eine oder mehrere Verbindungen der Formeln 7 bis 11.

Der Anteil der unpolaren Komponenten der Formeln 12-20 sowie C und D ist vorzugsweise 50 bis 85 %, insbesondere 55 bis 75 %, wobei der Anteil der Ester der Formeln 12-18 sowie C und D 50 bis 70 %, insbesondere 55 bis 65 % ausmacht. Vorzugsweise wurden mindestens 5 Ester verwendet. Vorzugsweise enthalten die Mischungen eine oder mehrere Verbindungen der Formel C und/ oder D.

Bevorzugte Mischungen enthalten sowohl Verbindungen ausgewählt aus den Formeln 12-14 als auch Verbindungen ausgewählt aus den Formeln 15-18. Der Anteil der Tolane der Formeln 19 und 20 ist vorzugsweise 10 bis 30 %, insbesondere 15 bis 25 %. Vorzugsweise werden mindestens drei Tolane verwendet.

Der Aufbau der erfindungsgemäßen Flüssigkristall-Anzeigen aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 360° gegeneinander verdreht ist, entspricht der für derartige Anzeigen üblichen Bauweise. Dabei ist der Begriff der üblichen Bauweise hier weit gefaßt und umfaßt auch alle Abwandlungen und Modifikationen der Supertwistzelle. Der Oberflächentiltwinkel an den beiden Trägerplatten kann gleich oder verschieden sein. Gleiche Tiltwinkel sind bevorzugt.

Ein wesentlicher Unterschied der erfindungsgemäßen Anzeigen zu den bisher üblichen auf der Basis der verdrillten nematischen Zeile besteht jedoch in der Wahl der Flüssigkristallparameter der Flüssigkristallschicht.

In den erfindungsgemäßen Anzeigen werden flüssigkristalline Phasen eingesetzt, bei denen die Flüssigkristallparameter Δ∈ und Δ∈/∈_{⊥} so gewählt werden, daß eine möglichst steile elektrooptische Kennlinie gewährleistet ist. zusammen mit einem maximalen Kontrast und einer minimalen Blickwinkelabhängigkeit bei gleichzeitigem nematischen Phasenbereich von mindestens 60° und einer Viskosität von 30 mPa.s oder darunter.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel. z.B. in Aceton, Chloroform oder Methanol. zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispiesweise können 0-15 % pleochroitische Farbstoffe zugesetzt werden.

Die folgenden Beispiele sollen die Erfindung erläutern. ohne sie zu begrenzen.

Es bedeutet:
- S-N: Phasenübergangs-Temperatur smektisch-nematisch,
- Klp.: Klärpunkt.
- Visk.: Viskosität bei 20° (m Pa.s),
- V₅₀/V₁₀: Steilheit der Kennlinie einer SFK-Anzeige bei 20°, d/P (Schichtdicke/Ganghöhe) ~ 0,35, d.Δn = 1,06, Verdrillungswinkel 180°, Anstellwinkel ~ 1°.

Vor und nachstehend sind alle Temperaturen in °C angegeben. Die Prozentzahlen sind Gewichtsprozente.

### Beispiel 1 (Vergleichsbeispiel)

Eine SFK-Anzeige mit folgenden Parametern:

| | |
|---|---|
| Verdrillungswinkel | 180° |
| Anstellwinkel | 1° |
| d/p (Schichtdicke/Ganghöhe) | 0,35 |
| d.Δn | 1,06 |

enthaltend eine Flüssigkristallmischung mit folgenden Parametern:

| | |
|---|---|
| Klärpunkt | 94,7° |
| Δn | 0,1285 (589 nm) |
| | 0,1264 (633 nm) |
| Viskosität | 20,9 mPa.s |
| Δ∈ | + 5,5 |
| ∈_{⊥} | 5,0 |

und bestehend aus
10 % p-trans-4-Propylcyclohexyl-benzonitril,
8 % 2-p-Cyanphenyl-5-propyl-1,3-dioxan.
7 % 2-p-Cyanphenyl-5-butyl-1,3-dioxan,
6 % trans-4-Propylcyclohexancarbonsäure-(p-methoxyphenylester),
6 % trans-4-Propylcyclohexancarbonsäure-(p-ethoxyphenylester),
6 % trans-4-Butylcyclohexancarbonsäure-(p-methoxyphenylester),
6 % trans-4-Butylcyclohexancarbonsäure-(p-ethoxyphenylester),
6 % trans-4-Pentylcyclohexancarbonsäure-(p-methoxyphenylester),
6 % trans-4-Pentylcyclohexancarbonsäure-(p-ethoxyphenylester),
6 % trans-4-(trans-4-Propylcyclohexyl)-cyclohexancarbonsäure-(p-propylphenylester),
6 % trans-4-(trans-4-Propylcyclohexyl)-cyclohexancarbonsäure-(p-pentylphenylester),
6 % trans-4-(trans-4-Butylcyclohexyl)-cyclohexancarbonsäure-(p-pentylphenylester),
6 % trans-4-(trans-4-Butylcyclohexyl)-cyclohexancarbonsäure-(p-propylphenylester),
3 % 4-Methyl-4'-ethoxytolan,
4 % 4-Ethyl-4'-methoxytolan,
4 % 4-(trans-4-Propylcyclohexyl)-4'-methoxytolan und
4 % 4-(trans-4-Propylcyclohexyl)-4'-ethoxytolan
zeigt ein Kennliniensteilheit V₅₀/V₁₀ von 3,8 % bei V₁₀ = 2,1 Volt.

### Beispiel 2

Eine Flüssigkristallmischung bestehend aus
7 % 2-Fluor-4-[trans-4-(trans-4-propylcyclohexyl)-cyclohexyl)-benzonitril,
8 % p-trans-4-Propylcyclohexyl-benzonitril,
8 % 4-Ethyl-4'-cyanbiphenyl,
7 % 4-Propyl-4'-cyanbiphenyl,
8 % 1,2-Diflour-4-[trans-4-(trans-4-propylcyclohexyl)-cyclohexyl]-benzol, 5 % trans-4-Propylcyclohexancarbonsäure-(p-methoxyphenylester),
4 % trans-4-Propylcyclohexancarbonsäure-(p-ethoxyphenylester),
5 % trans-4-Butylcyclohexancarbonsäure-(p-methoxyphenylester),
4 % trans-4-Butylcyclohexancarbonsäure-(p-methoxyphenylester),
4 % trans-4-Pentylcyclohexancarbonsäure-(p-methoxyphenylester),
4 % trans-4-Pentylcyclohexancarbonsäure-(p-methoxyphenylester),
6 % trans-4-(trans-4-Propylcyclohexyl)-cyclohexancarbonsäure-(p-propylphenylester),
6 % trans-4-(trans-4-Propylcyclohexyl)-cyclohexancarbonsäure-(p-pentylphenylester),
6 % trans-4-(trans-4-Butylcyclohexyl)-cyclohexancarbonsäure-(p-pentylphenylester),
6 % trans-4-(trans-4-Butylcyclohexyl)-cyclohexancarbonsäure-(p-propylphenylester),
6 % trans-4-Butylcyclohexancarbonsäure-(p-trans-4-propylcyclohexylphenylester) und
6 % trans-4-Pentylcyclohexancarbonsäure-(p-trans-4-propylcyclohexylphenylester)
zeichnet sich durch vorzügliche Kennliniensteilheiten in SFK-Anzeigen aus.

## Patentansprüche

1. Flüssigkristallmischung zur Verwendung in Supertwist-Flussigkristallanzeigen mit
- zwei planparallelen Trägerplatten, die mit einer Umrandung eine Zelle bilden,
- einer in der Zelle befindlichen nematischen Flüssigkristallmischung mit positiver dielektrischer Anisotropie und mit mindestens einem chiralen Dotierstoff,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung folgenden Bedingungen genügt:
- nematischer Phasenbereich von mindestens 60 °C,
- Viskosität von 30 mPa.s oder darunter,
- Δ∈/∈_{⊥} < 1.5, wobei Δ∈ die dielektrische Anisotropie und ∈_{⊥} die Dielektrizitätskonstante in Richtung der kurzen Achse der Flüssigkristallmoleküle bedeutet, und
- Δ∈ größer oder gleich + 5,
und auf folgenden Komponenten basiert:
a) deutlich dielektrisch positiven Verbindungen mit großem ∈_{⊥} ausgewählt aus der Gruppe bestehend aus den Formeln 1-8: 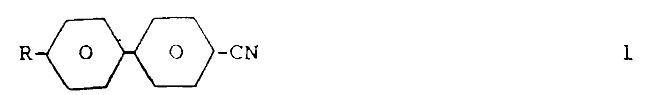 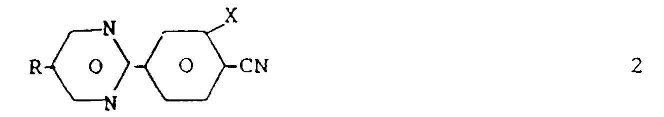 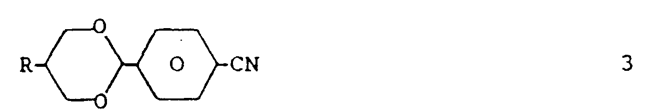 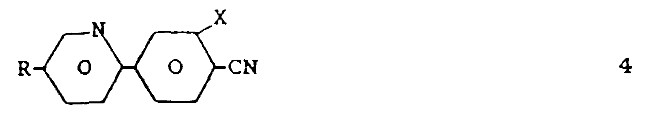 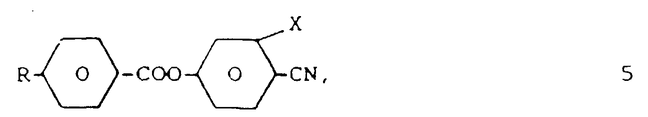 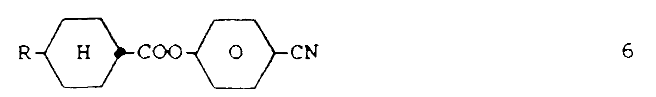 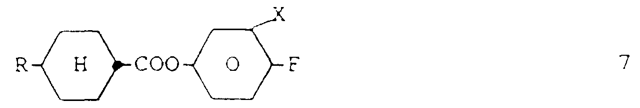 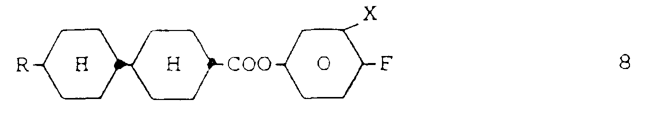 und oder Verbindungen der Formel A und/oder B 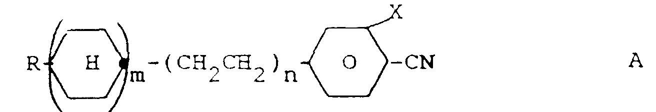 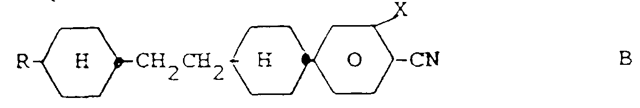 und gegebenenfalls Verbindungen ausgewählt aus der Gruppe bestehend aus den Formeln 9 bis 11 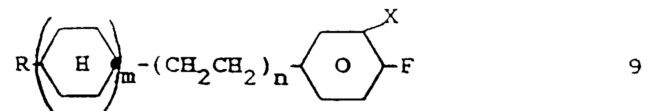 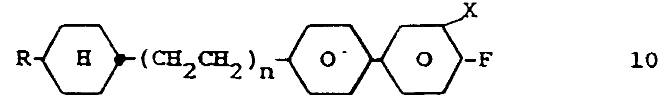 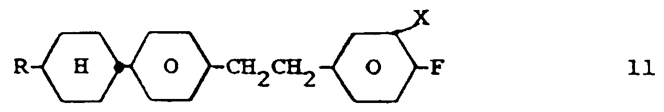 und
b) relativ unpolaren Verbindungen mit großem ∈_{⊥} ausgewählt aus der Gruppe bestehend aus den Formeln 12 bis 18: 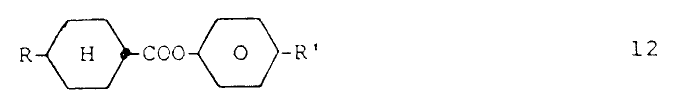 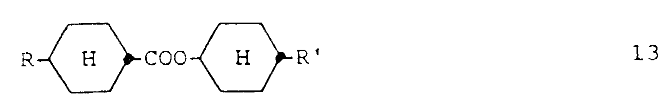 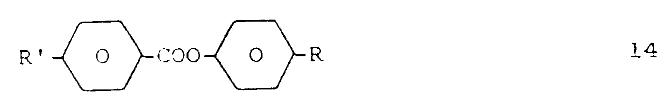 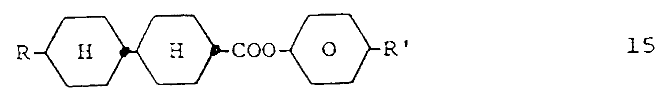 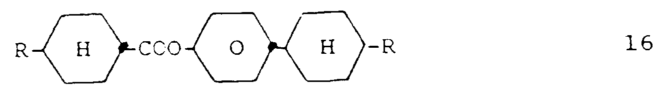 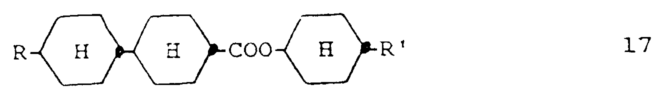 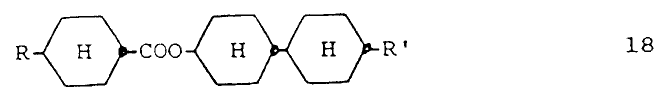 und/oder Verbindungen aus der Gruppe bestehend aus den Formeln C und D 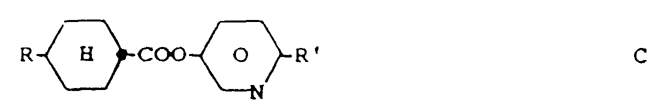 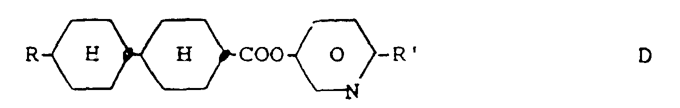 und gegebenenfalls Verbindungen mit hoher Doppelbrechung aus der Gruppe bestehend aus den Formeln 19 und 20: 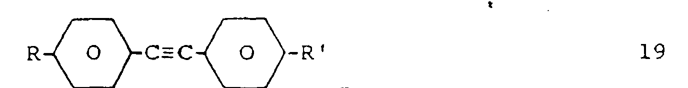 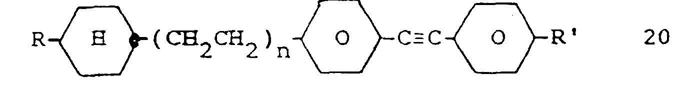 wobei X H oder F, m 1 oder 2, n 0 oder 1, und R in jedem Fall jeweils geradkettiges Alkyl, Oxaalkyl oder Alkenyl mit 2 bis 7 C-Atomen und R' jeweils geradkettiges Alkyl oder Alkoxy mit jeweils 1 bis 7 C-Atomen bedeutet
mit den Maßgaben,
daß die Mischung eine oder mehrere Verbindungen der Formeln A und/oder B enthält, worin X Fluor bedeutet, und
daß eine Mischung aus
10 % 4-[2-(trans-4-Propylcyclohexyl)ethyl-4'-propyldiphenylacetylen,
10 % 4-[2-(trans-4-Propylcyclohexyl)ethyl-4'-butyldiphenylacetylen,
10 % 4-(trans-4-Ethylcyclohexyl )-2-fluorobenzonitril,
10 % 4-(trans-4-Propylcyclohexyl)-2-fluorobenzonitril,
10 % 4-Fluorophenyl-trans-4-pentylcyclohexancarboxylat,
10 % 4-Fluorophenyl-trans-4-heptylcyclohexancarboxylat,
10 % 4-Ethoxyphenyl-trans-4-propylcyclohexancarboxylat,
20 % 4-[trans-4-(trans-4-propylcyclohexyl)cyclohexyl]propylbenzol,
5 % 4-(trans-4-Pentylcyclohexyl)-4'-ethylbiphenyl und
5 % 4"-Pentyl-4-cyanoterphenyl
ausgeschlossen ist.

2. Mischung nach Anspruch 1, dadurch gekennzeichnet, daß die Dielektrizitätskonstante ∈_{⊥} größer oder gleich 4 ist.

3. Verwendung einer Flüssigkristallmischung gemäß Anspruch 1 oder 2 als Dielektrikum einer Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie und mit mindestens einem chiralen Dotierstoff,
- Elektrodenschichten mit darüberliegenden Orientierungsschichten auf den Innenseiten der Trägerplatten,
- einem Anstellwinkel zwischen der Längsachse der Moleküle an der Oberflache der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°.

4. Supertwist-Flüssigkristallanzeige mit
- zwei planparallelen Trägerplatten, die mit einer Umrandung eine Zelle bilden,
- einer in der Zelle befindlichen nematischen Flüssigkristallmischung mit positiver dielektrischer Anisotropie und mit mindestens einem chiralen Dotierstoff,
- Elektrodenschichten mit darüberliegenden Orientierungsschichten auf den Innenseiten der Trägerplatten,
- einem Anstellwinkel zwischen der Längsachse der Moleküle an der Oberfläche der Trägerplatten und den Trägerplatten von etwa 1 Grad bis 30 Grad, und
- einem Verdrillungswinkel der Flüssigkristallmischung in der Zelle von Orientierungsschicht zu Orientierungsschicht dem Betrag nach zwischen 160 und 360°, dadurch gekennzeichnet, daß die nematische Flüssigkristallmischung Anspruch 1 oder 2 genügt.

5. Anzeige nach Anspruch 4, dadurch gekennzeichnet, daß das Produkt von Doppelbrechung Δn und der Schichtdicke der Flüssigkristallmischung zwischen 0,1 µm und 2,5 µm liegt.

6. Anzeige nach mindestens einem der Ansprüche 4 und 5, dadurch gekennzeichnet, daß die Dielektrizitätskonstante ∈_{⊥} größer oder gleich 4 ist.

## Claims

1. Liquid-crystal mixture for use in supertwist liquid-crystal displays having
- two plane-parallel support plates which, together with a border, form a cell,
- a nematic liquid-crystal mixture which is located in the cell, has positive dielectric anisotropy and has at least one chiral dope,
- electrode layers with overlying orientation layers on the insides of the support plates,
- a pitch angle between the longitudinal axis of the molecules at the surface of the support plates and the support plates of from about 1 degree to 30 degrees, and
- a twist angle of the liquid-crystal mixture in the cell of between 160 and 360° from orientation layer to orientation layer, characterized in that the nematic liquid-crystal mixture satisfies the following conditions:
- a nematic phase range of at least 60°C,
- a viscosity of 30 mPa.s or less,
- Δε/ε_{⊥} < 1.5, where Δε denotes the dielectric anisotropy and ε_{⊥} denotes the dielectric constant in the direction of the short axis of the liquid-crystal molecules, and
- Δε is greater than or equal to +5,
and is based on the following components:
a) clearly dielectrically positive compounds having a large ε_{⊥} selected from the group comprising the formulae 1-8: 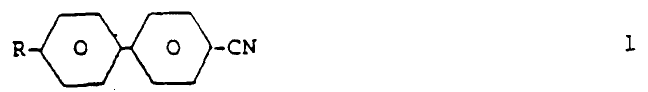 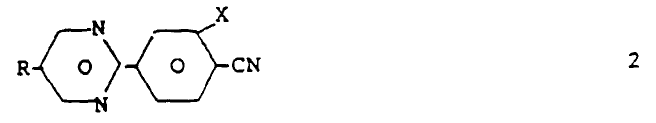 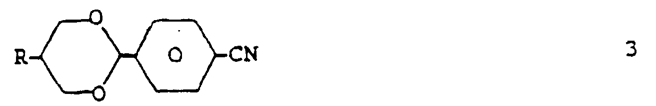 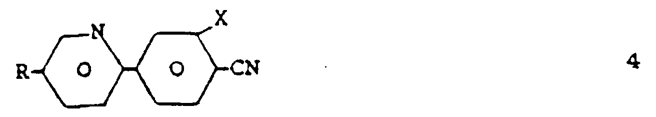 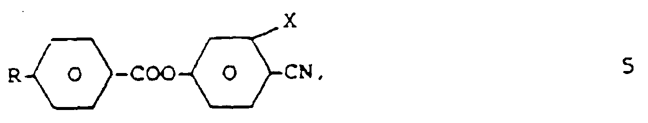 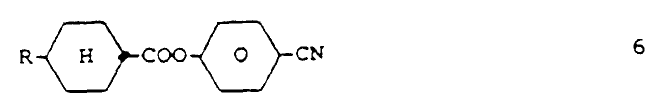 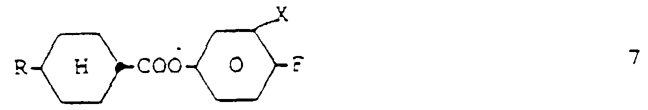 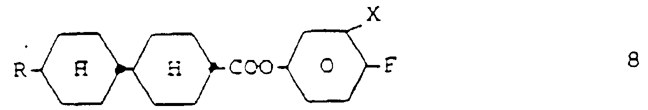 and/or compounds of the formula A and/or B 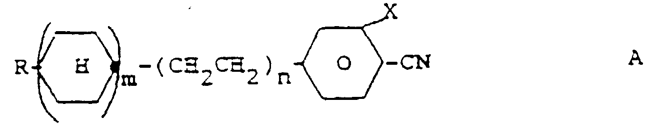 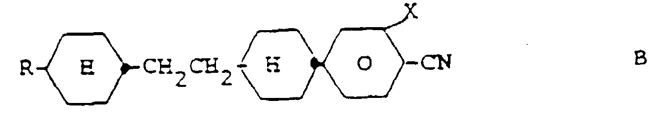 and, if appropriate, compounds selected from the group comprising the formulae 9 to 11 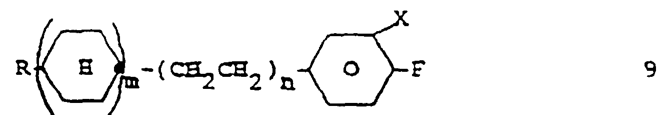 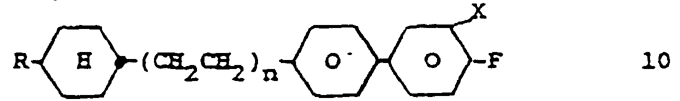 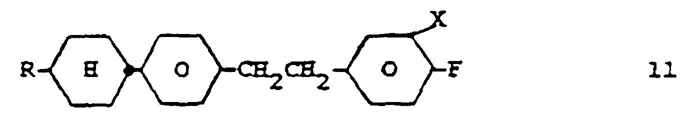 and
b) relatively non-polar compounds having a large ε_{⊥}, selected from the group comprising the formulae 12 to 18: 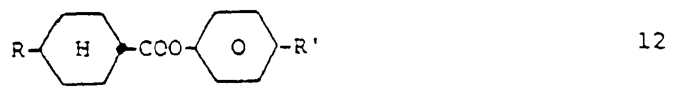 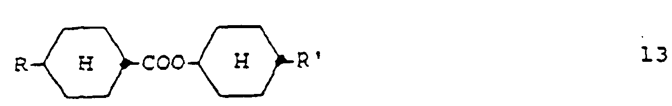 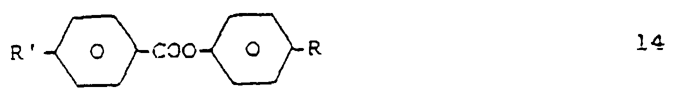 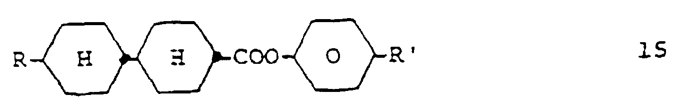 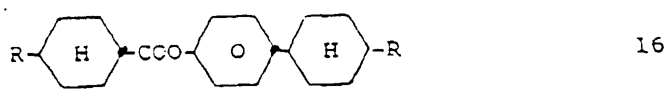 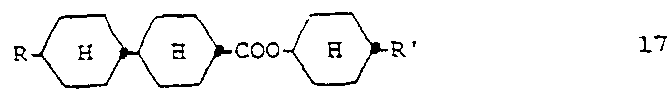 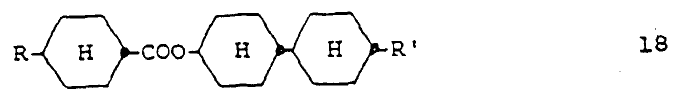 and/or compounds from the group comprising the formulae C and D 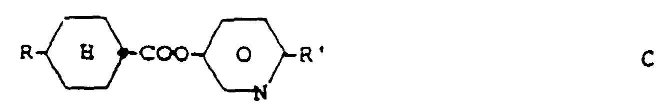 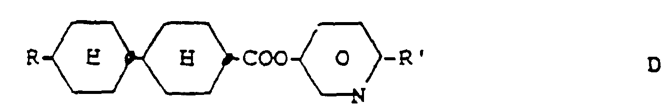 and, if appropriate, compounds having a high birefringence, from the group comprising the formulae 19 and 20: 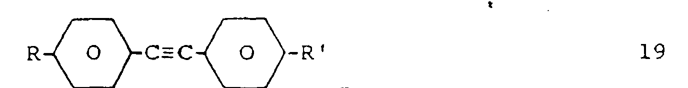 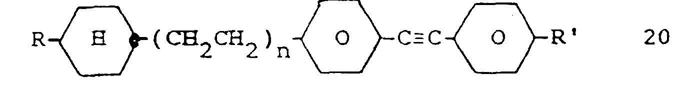
where X is H or F, m is 1 or 2, n is 0 or 1, and R is in each case alkyl, oxaalkyl or alkenyl having 2 to 7 C atoms, each of which is straight-chain, and R' is alkyl or alkoxy, each of which has 1 to 7 C atoms and each of which is straight-chain, with the provisos
that the mixture contains one or more compounds of the formulae A and/or B in which X is fluorine, and
that a mixture of
10% of 4-[2-(trans-4-propylcyclohexyl)ethyl-4'-propyldiphenylacetylene,
10% of 4-[2-(trans-4-propylcyclohexyl)ethyl-4'-butyldiphenylacetylene,
10% of 4-(trans-4-ethylcyclohexyl)-2-fluorobenzonitrile,
10% of 4-(trans-4-propylcyclohexyl)-2-fluorobenzonitrile,
10% of 4-fluorophenyl trans-4-pentylcyclohexane-carboxylate,
10% of 4-fluorophenyl trans-4-heptylcyclohexane-carboxylate,
10% of 4-ethoxyphenyl trans-4-propylcyclohexane-carboxylate,
20% of 4-[trans-4-(trans-4-propylcyclohexyl)-cyclohexyl]propylbenzene,
5% of 4-(trans-4-pentylcyclohexyl)-4'-ethylbiphenyl and
5% of 4"-pentyl-4-cyanoterphenyl
is excluded.

2. Mixture according to Claim 1, characterized in that the dielectric constant ε_{⊥} is greater than or equal to 4.

3. Use of a liquid-crystal mixture according to Claim 1 or 2, as the dielectric of a supertwist liquid-crystal display having
- two plane-parallel support plates which, together with a border, form a cell,
- a nematic liquid-crystal mixture which is located in the cell, has positive dielectric anisotropy and has at least one chiral dope,
- electrode layers with overlying orientation layers on the insides of the support plates,
- a pitch angle between the longitudinal axis of the molecules at the surface of the support plates and the support plates of from about 1 degree to 30 degrees, and
- a twist angle of the liquid-crystal mixture in the cell of between 160 and 360° from orientation layer to orientation layer.

4. Supertwist liquid-crystal display having
- two plane-parallel support plates which, together with a border, form a cell,
- a nematic liquid-crystal mixture which is located in the cell, has positive dielectric anisotropy and has at least one chiral dope,
- electrode layers with overlying orientation layers on the insides of the support plates,
- a pitch angle between the longitudinal axis of the molecules at the surface of the support plates and the support plates of from about 1 degree to 30 degrees, and
- a twist angle of the liquid-crystal mixture in the cell of between 160 and 360° from orientation layer to orientation layer, characterized in that the nematic liquid-crystal mixture satisfies Claim 1 or 2.

5. Display according to Claim 4, characterized in that the product of the birefringence An and the layer thickness of the liquid-crystal mixture is between 0.1 µm and 2.5 µm.

6. Display according to at least one of Claims 4 and 5, characterized in that the dielectric constant ε_{⊥} is greater than or equal to 4.

## Revendications

1. Mélange de cristaux liquides, pour utilisation dans des dispositifs d'affichage à cristaux liquides supertorsadés, comprenant
- deux plaques de support plan-parallèles, qui avec une bordure forment une cellule,
- un mélange de cristaux liquides nématiques se trouvant dans la cellule, présentant une anisotropie diélectrique positive, et comportant au moins un dopant chiral,
- des couches d'électrodes, sur lesquelles se trouvent des couches d'orientation, et disposées sur les faces intérieures des plaques de support,
- un angle d'inclinaison d'environ 1 à 30 grades entre l'axe longitudinal des molécules sur la surface des plaques de support et les plaques de support, et
- un angle de torsadage du mélange de cristaux liquides se trouvant dans la cellule, d'une couche d'orientation à une autre, compris entre environ 160 et 360°,
caractérisé en ce que le mélange de cristaux liquides nématiques satisfait aux conditions suivantes :
- phase nématique d'au moins 60°C,
- viscosité de 30 mPa.s ou moins,
- Δε/ε_{⊥} < 1,5, où Δε représente l'anisotropie diélectrique, et ε_{⊥} représente la constante diélectrique dans la direction du petit axe des molécules de cristaux liquides, et
- Δε est supérieur ou égal à + 5,
et se fonde sur les composants suivants :
a) des composés ayant une anisotropie diélectrique nettement positive, avec un grand ε_{⊥}, choisis dans le groupe comprenant les composés de formules 1 à 8 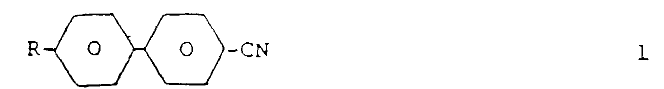 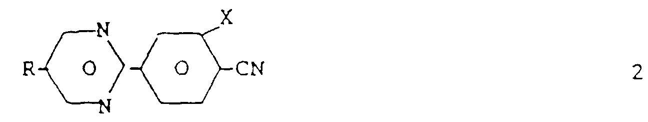 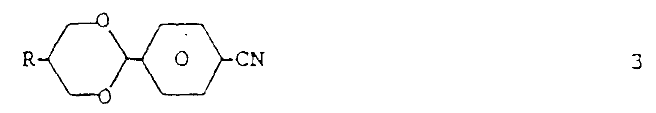 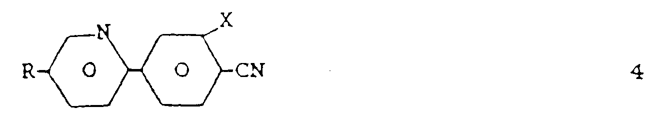 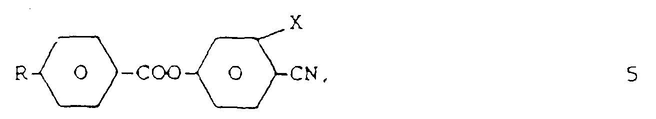 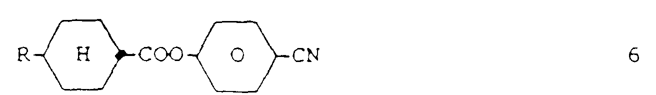 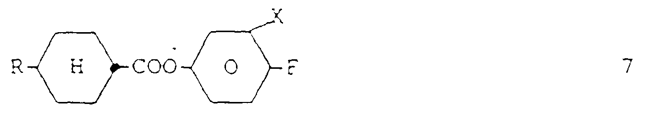 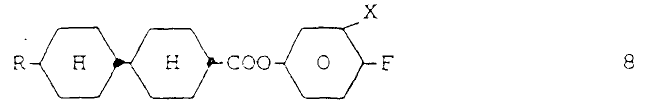 et/ou les composés de formule A et/ou B 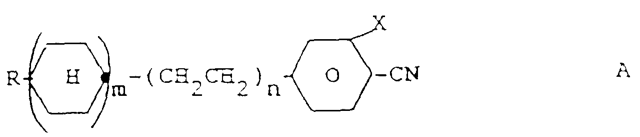 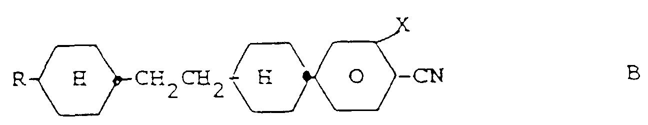 et éventuellement les composés choisis dans le groupe comprenant les composés de formules 9 à 11 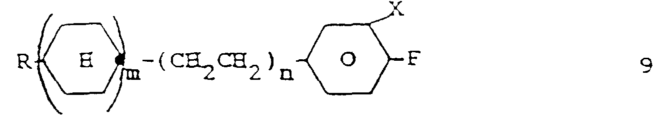 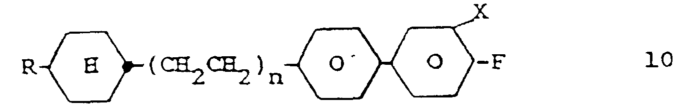 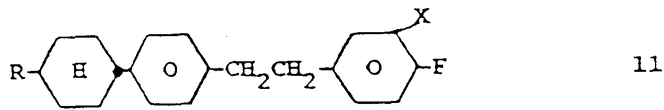 et
b) les composés relativement apolaires, ayant un grand ε_{⊥}, choisis dans le groupe comprenant les composés de formules 12 à 18 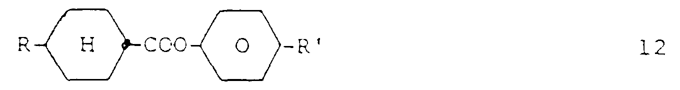 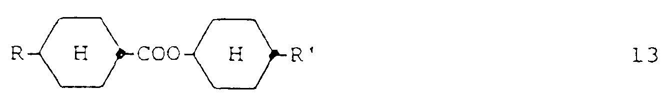 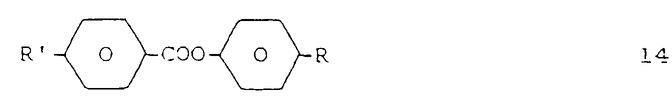 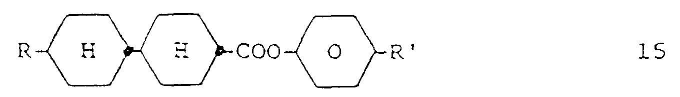 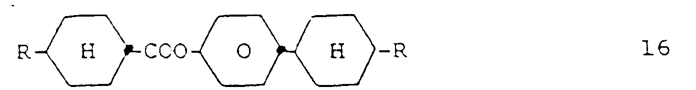 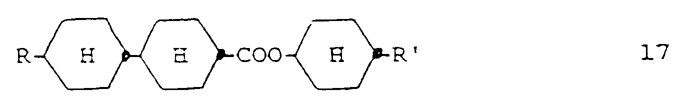 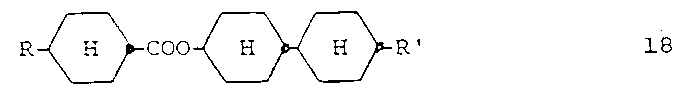 et/ou les composés du groupe comprenant les composés de formules C et D 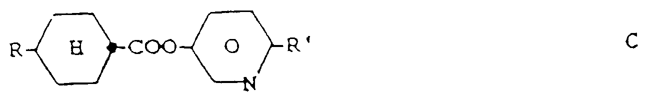 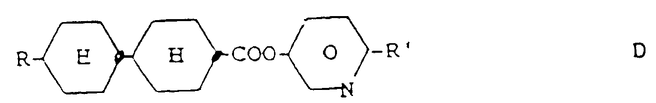 et éventuellement les composés ayant une forte double réfraction, choisis dans le groupe comprenant les composés de formules 19 et 20 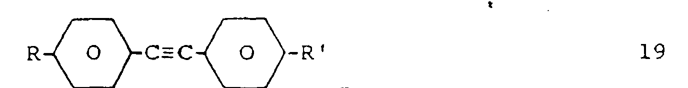 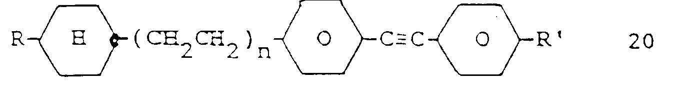
dans lesquelles X est H ou F, m vaut 1 ou 2, n vaut 0 ou 1, et R, dans chaque cas, est un groupe alkyle, oxa-alkyle ou alcényle à chaîne droite en C₂ à C₇, et chaque R' est un groupe alkyle ou alcoxy à chaîne droite ayant de 1 à 7 atomes de carbone,
à la condition que le mélange contienne un ou plusieurs composés de formule A et/ou B, où X est le groupe fluoro, et que soit exclu un mélange
de 10 % de 4-[2-(trans-4-propylcyclohexyl)éthyl-4'-propyldiphénylacétylène,
de 10 % de 4-[2-(trans-4-propylcyclohexyl)éthyl-4'-butyldiphénylacétylène,
de 10 % de 4-(trans-4-éthylcyclohexyl)-2-fluorobenzonitrile,
de 10 % de 4-(trans-4-propylcyclohexyl)-2-fluorobenzonitrile,
de 10 % de trans-4-pentylcyclohexanecarboxylate de 4-fluorophényle,
de 10 % de trans-4-heptylcyclohexanecarboxylate de 4-fluorophényle,
de 10 % de trans-4-propylcyclohexanecarboxylate de 4-fluorophényle,
de 20 % de 4-[trans-4-(trans-4-propylcyclohexyl)cyclohexyl]propylbenzène,
de 5 % de 4-(trans-4-pentylcyclohexyl)-4'-éthyl-biphényle et
de 5 % de 4"-pentyl-4-cyanoterphényle.

2. Mélange selon la revendication 1, caractérisé en ce que la constante diélectrique ε_{⊥} est supérieure ou égale à 4.

3. Utilisation d'un mélange de cristaux liquides selon la revendication 1 ou 2 en tant que diélectrique pour un dispositif d'affichage à cristaux liquides super-torsadés, comportant :
- des couches d'électrodes, sur lesquelles se trouvent des couches d'orientation, et disposées sur les faces intérieures des plaques de support,
- un angle d'inclinaison d'environ 1 à 30 grades entre l'axe longitudinal des molécules sur la surface des plaques de support et les plaques de support, et
- un angle de torsadage du mélange de cristaux liquides se trouvant dans la cellule, d'une couche d'orientation à une autre, compris entre environ 160 et 360°.

4. Dispositif d'affichage à cristaux liquides super-torsadés, comportant
- des couches d'électrodes, sur lesquelles se trouvent des couches d'orientation, et disposées sur les faces intérieures des plaques de support,
- un angle d'inclinaison d'environ 1 à 30 grades entre l'axe longitudinal des molécules sur la surface des plaques de support et les plaques de support, et
- un angle de torsadage du mélange de cristaux liquides se trouvant dans la cellule, d'une couche d'orientation à une autre, compris entre environ 160 et 360°,
caractérisé en ce que le mélange de cristaux liquides nématiques satisfait à la revendication 1 ou 2.

5. Dispositif d'affichage selon la revendication 4, caractérisé en ce que le produit de la double réfraction An par l'épaisseur de couche du mélange de cristaux liquides est compris entre 0,1 et 2,5 µm.

6. Dispositif d'affichage selon l'une des revendica-tions 4 et 5, caractérisé en ce que la constante diélec-trique ε_{⊥} est supérieure ou égale à 4.
